(19) Europäisches Patentamt
European Patent Office
Office européen des brevets

(11) EP 2 290 001 B1

(12) **EUROPEAN PATENT SPECIFICATION**

(45) Date of publication and mention of the grant of the patent:
**11.10.2017 Bulletin 2017/41**

(51) Int Cl.:
***C08L 71/00*** $^{(2006.01)}$ ***C08L 81/06*** $^{(2006.01)}$

(21) Application number: **10173261.8**

(22) Date of filing: **18.08.2010**

(54) **Use of engineering polymer compositions for the manufacture of high performance films**

Verwendung technischer Kunststoff-Zusammensetzungen für die Herstellung von Hochleistungsfilmen

Utilisation de compositions de polymère technique pour la préparation de films à haute performance

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **20.08.2009 US 235449 P**

(43) Date of publication of application:
**02.03.2011 Bulletin 2011/09**

(73) Proprietor: **Solvay Specialty Polymers USA, LLC.**
**Alpharetta, GA 30005 (US)**

(72) Inventors:
- **El-Hibri, Mohammad Jamal**
  **Atlanta, GA 30328 (US)**
- **Axelrad, Shari W**
  **Atlanta, GA 30324 (US)**

(74) Representative: **Vande Gucht, Anne et al**
**Solvay S.A.**
**Département de la Propriété Industrielle**
**Rue de Ransbeek, 310**
**1120 Bruxelles (BE)**

(56) References cited:
**EP-A2- 0 254 455**
**WO-A1-2007/071780**
**US-A- 4 713 426**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 290 001 B1

## Description

### FIELD OF THE INVENTION

The present invention relates to high performance PEEK-based films, in particular to thin melt extruded films. It relates also to PEEK-based polymer compositions which are especially well suited for the manufacture of the films of concern, and more generally for the manufacture of any essentially at most two-dimensional articles.

### BACKGROUND OF THE INVENTION

Polyetheretherketone (PEEK) has been long recognized as an ultra-performance semi-crystalline polymer. Typically, PEEK has a glass transition temperature of about 145 °C, a melting point of about 340 °C, and a crystallinity level that ranges from about 35 % to about 50% depending on molecular weight.

Polyphenylsulfone (PPSU) is a high-performance, typically completely amorphous engineering polymer. PPSU has typically a glass transition temperature of about 220 °C. One of the main attractive attributes of PPSU is that it has low notch sensitivity (i.e. super-tough impact) performance, of which a notched Izod impact value of about 13 ft-lb/in (690 J/m) is one manifestation.

PEEK/PPSU blends have been discussed extensively in the patent literature. The blends offer a balance of properties which includes: higher elongation and impact resistance than comparable PEEK grades, as well as higher heat deflection temperatures for unfilled systems. One of the key features of the blends when prepared at a "high" PEEK/PPSU ratio, i.e. generally 60/40 or higher, is that they retain most of the chemical resistance performance exhibited by PEEK. The chemical resistance of the PEEK-rich blends to a broad range of organic solvents is much higher than that exhibited by PPSU and also higher than what would be expected from the weighted average of the two components.

It would be desirable to take advantage of the performance properties and attributes of the PEEK/PPSU blends described above in thin film form. It has been found that blends of PEEK and PPSU are generally melt extrudable into films of thicknesses of 1.5 mil and higher. Unfortunately, at thicknesses below 1.5 mil, and especially below 1.0 mil, it becomes extremely difficult to keep the film web from tearing or forming holes during melt extrusion.

There remains a strong need for cheaper and thinner PEEK-based films ; there remains also a strong need for PEEK-based films having a reduced tendency to tearing and/or forming holes during melt extrusion. More generally, there remains a strong need for cheaper and thinner essentially one- or two-dimensional shaped articles ; there remains also a strong need for PEEK-based essentially one- or two-dimensional shaped articles having a reduced tendency to tearing and/or forming holes during melt manufacturing and/or having improved surface appearance (e.g. having a lower amount of surface defects) and/or having an increased smoothness. There remains also a strong need for a polymer composition that would be especially well suited for the manufacture of the above films and other essentially at most two-dimensional shaped articles.

### SUMMARY OF THE INVENTION

The above needs, and still other ones as herein detailed, are met by the present invention.

Hence, a first aspect of the present invention is directed to a film (F) having a thickness of below 1.5 mil composed of a polymer composition (C) comprising a polyetheretherketone (P1) and a polyphenylsulfone (P2), wherein

- the weight of the polyphenylsulfone (P2), based on the total weight of the polyetheretherketone (P1) and the polyphenylsulfone (P2), is of at most 35 %, and,
- the polyphenylsulfone (P2) has a melt flow of at least 20 g/10 min at 365 °C and under a load of 5.0 kg, as measured in accordance with ASTM method D1238.

Particularly good results were obtained when :

- the film (F) had a thickness of from 0.20 mil to 0.50 mil,
- the polyetheretherketone (P1) was a homopolymer of which essentially all the recurring units were recurring units (R1) of formula :

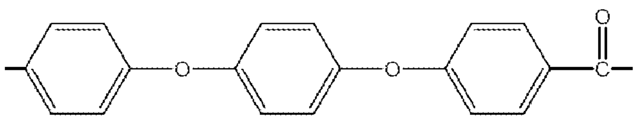

and had a melt viscosity of from 0.25 kPa.s to 0.50 kPa.s at 400°C and a shear rate of 1000 $s^{-1}$ as measured using a capillary rheometer in accordance with ASTM D3835,

- the polyphenylsulfone (P2) was a homopolymer of which essentially all the recurring units were recurring units (R2) of formula :

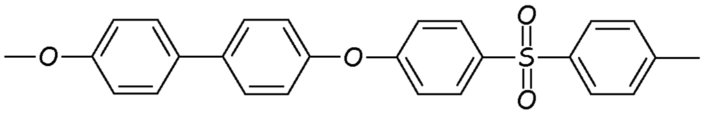

and had a melt flow of from 20 g/10 min to 40 g/10 min at 365 °C and under a load of 5.0 kg, as measured in accordance with ASTM method D1238,

- the weight of the polyphenylsulfone (P2), based on the total weight of the polyetheretherketone (P1) and the polyphenylsulfone (P2), ranged from 15 % to 27 %, and
- the combined weight of the polyetheretherketone (P1) and the polyphenylsulfone (P2), based on the total weight of the polymer composition (C), was greater than 90 %.

A second aspect of the present invention is directed to a method for manufacturing the film (F) as above described, said method comprising melt extruding the polymer composition (C) as above described.
A third aspect of the present invention is directed to the polymer composition (C) itself, as above described.
A fourth aspect of the present invention is directed to an essentially at most two-dimensional shaped article (A) comprising the polymer composition (C) as above described.
A last aspect of the present invention is directed to a method for manufacturing the shaped article (A) as above described, said method comprising melt processing (in particular, melt extruding) the polymer composition (C) as above described.

DETAILED DESCRIPTION OF THE INVENTION

The film (F).

The thickness (t) of the film (F) can be defined as :

$$t = \int^{V} \tau(x,y,z)\, dx\, dy\, dz / V,$$

wherein x, y and z are the coordinates in a three-dimensional space of an elementary volume dV (dV being equal to dx times dy times dz) of the film of overall plain volume V, and $\tau$ is the local thickness. The local thickness $\tau$, associated to a material point of coordinates (x,y,z), can be defined as the length of the shortest straight line D including the material point of concern, which goes right through the film (i.e. which goes from the material point where D enters the film to the material point where D exits the film). In general, the local thickness $\tau$ is substantially constant over the whole film (F), i.e. each material point of the film (F) has substantially the same thickness. Preferably, the local thickness $\tau$ is essentially constant or perfectly constant over the whole film (F), i.e. respectively, each material point of the film (F) has essentially the same or has exactly the same thickness.
The thickness of the film (F) is below 1.5 mil. It is preferably below 1.0 mil (1.0 mil = 25.4 $\mu$m), more preferably of at most 0.75 mil, and still more preferably of at most 0.50 mil. The invention encompasses further a film (F) having a thickness of at most 0.40 mil, or a film (F) having a thickness of at most 0.30 mil.
Besides, the thickness of the film (F) exceeds advantageously a certain lower limit; indeed, it is observed that, when the film (F) has a thickness below this lower limit, it is sometimes prone to tearing and hole formation. To fix the ideas, the lower limit is typically of about 0.05 mil; the film (F) has a thickness of preferably at least 0.10 mil, more preferably of at least 0.15 mil, and still more preferably of at least 0.20 mil.
The film (F) is advantageously not coated on a substrate. In general, thin layers of a polymer material which are coated on a substrate, commonly referred to as coatings, are advantageously produced by solution processing ; in contrast, and as will be detailed hereafter, the film (F) is advantageously prepared by melt processing.
The film (F) can be made by any method well known to the skilled in the art including non preferred methods including dissolving the polymers (P1) and (P2) in a solvent (commonly referred to as "solution processing") and preferred methods including forming a melt comprising the polymers (P1) and (P2) (commonly referred to as "melt processing"). Hence, in a certain preferred embodiment of the present invention, a method for manufacturing the film (F) which

comprises melt extruding the polymer composition (C) is provided. In said embodiment, the followings are preferred : an extruder comprising a die is used, the polymer composition (C) exits the die, the polymer composition (C) is a melt when it exits the die, and the temperature of the melt when it exits the die is of at least 360°C. The temperature of the melt when it exits the die is more preferably of at least 370°C, and still more preferably of at least 375 °C. Besides, the temperature of the melt when it exits the die is generally of at most 430°C, preferably of at most 420°C, more preferably of at most 410°C and still more preferably of at most 400°C.

The polymer composition (C).

The combined weight of the polyetheretherketone (P1) and the polyphenylsulfone (P2), based on the total weight of the polymer composition (C), is usually greater than 50 %, preferably greater than 80 %, more preferably greater than 90 %. Still more preferably, the polymer composition (C) consists essentially of the polyetheretherketone (P1) and the polyphenylsulfone (P2). The most preferably, the polymer composition (C) consists of the polyetheretherketone (P1) and the polyphenylsulfone (P2).

In the polymer composition (C), the weight of the polyphenylsulfone (P2), based on the total weight of the polyetheretherketone (P1) and the polyphenylsulfone (P2), is preferably of at most 31 %, more preferably of at most 27 %. The invention further encompasses a polymer composition (C) wherein the weight of the polyphenylsulfone (P2), based on the total weight of the polyetheretherketone (P1) and the polyphenylsulfone (P2), is of at most 23 % and a polymer composition (C) wherein the weight of the polyphenylsulfone (P2), based on the total weight of the polyetheretherketone (P1) and the polyphenylsulfone (P2), is of at most 21 %.

Besides, in the polymer composition (C), the weight of the polyphenylsulfone (P2), based on the total weight of the polyetheretherketone (P1) and the polyphenylsulfone (P2), can be notably of at least 1 %, at least 2 % or at least 5 %. It is preferably of at least 10 %, and more preferably of at least 15 %. The invention further encompasses a polymer composition (C) wherein the weight of the polyphenylsulfone (P2), based on the total weight of the polyetheretherketone (P1) and the polyphenylsulfone (P2), is of at least 19 %.

The polymer composition (C) is advantageously prepared by any conventional mixing method. A preferred method comprises dry mixing the ingredients of the polymer composition (C) (i.e. the polyetheretherketone (P1), the polyphenylsulfone (P2) and, when present, one or more optional ingredients, as detailed hereinafter) in powder or granular form, using e.g. a mechanical blender, then melt extruding the mixture into strands and chopping the strands into pellets.

The polyetheretherketone (P1).

As previously mentioned, the polymer composition (C) contains a polyetheretherketone (P1).

For the purpose of the present invention, the term "polyetherketoneketone" is intended to denote any polymer of which more than 50 wt. % of the recurring units are recurring units (R1) of formula

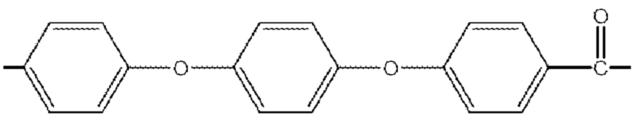

(I).

The polyetheretherketone (P1) can be notably a homopolymer, a random, alternate or block copolymer.

When the polyetheretherketone (P1) is a copolymer, its recurring units can be notably composed essentially of recurring units (R1) of formula (I) and recurring units (R1*) different from recurring units (R1), of one or more formulae such as :

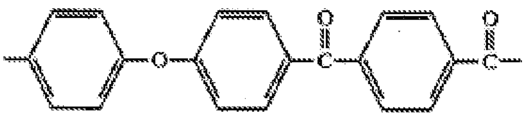

(II)

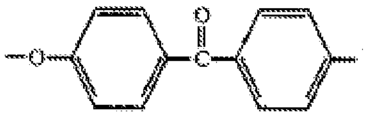

(III)

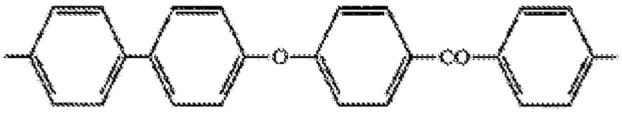

(IV)

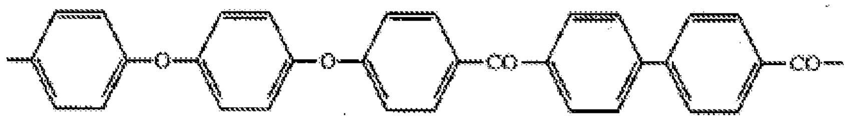

(V)

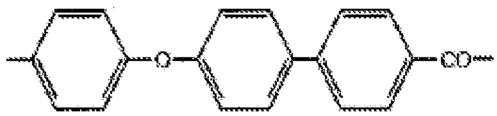

(VI)

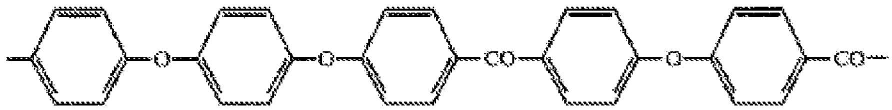

(VII)

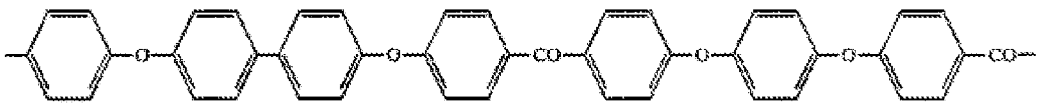

(VIII)

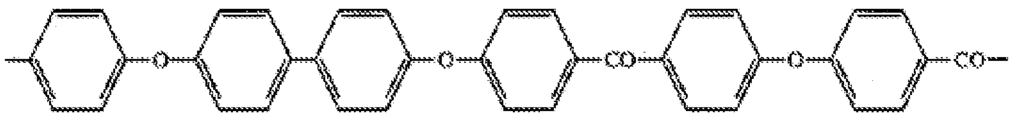

(IX)

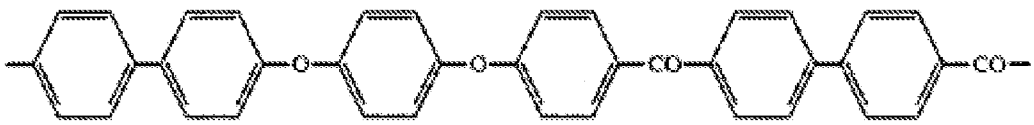

(X)

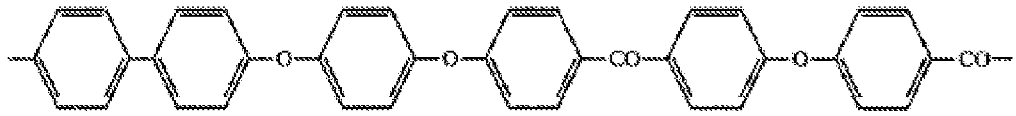

(XI)

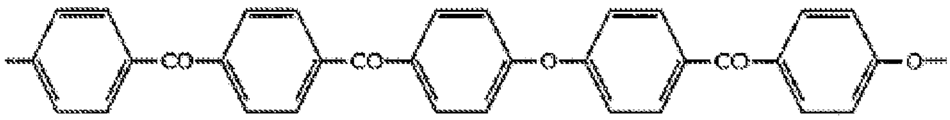

(XII)

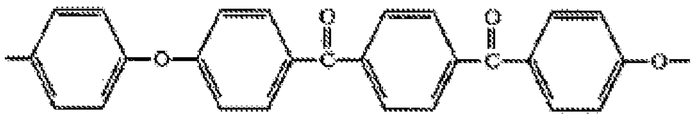

(XIII)

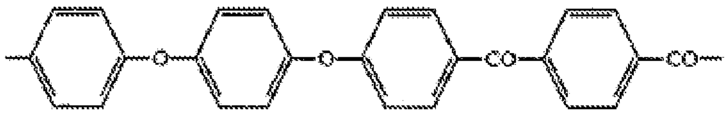

(XIV)

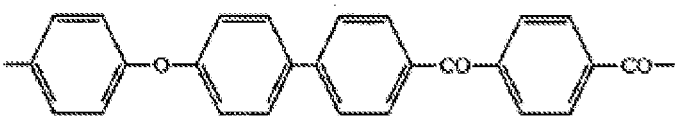

(XV)

and/or

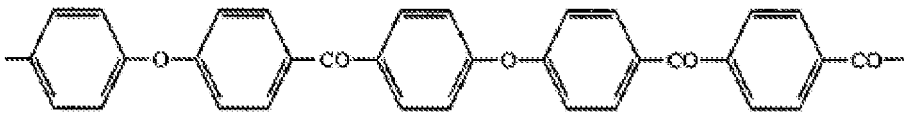

(XVI).

Preferably more than 70 wt. %, and more preferably more than 90 wt. % of the recurring units of the polyetheretherketone (P1) are recurring units (R1). Still more preferably, the polyetheretherketone (P1) is a homopolymer, i.e. essentially all, or even all, its recurring units are recurring units (R1).

The polyetheretherketone (P1) can have a reduced viscosity (RV) of at least 0.60 dl/g, at least 0.65 dl/g or at least 0.70 dl/g, as measured in 95-98 % sulfuric acid (d= 1.84 g/ml) at a polyetheretherketone concentration of 1 g/100 ml. The measurement is performed using a No 50 Cannon-Fleske viscometer ; RV is measured at 25°C in a time less than 4 hours after dissolution. Besides, the RV of the polyetheretherketone (P1) can be notably of at most 1.20 dl/g or of at most 1.10 dl/g. The polyetheretherketone (P1) can also have a RV of from 0.70 to 0.90 dl/g, or of from 0.90 to 1.10 dl/g.

The polyetheretherketone (P1) has a melt viscosity of advantageously at least 0.12 kPa.s, preferably at least 0.25 kPa.s, more preferably at least 0.32 kPa.s, still more preferably at least 0.38 kPa.s at 400°C and a shear rate of 1000 $s^{-1}$, as measured using a capillary rheometer in accordance with ASTM D3835. As capillary rheometer, a Kayeness Galaxy V Rheometer (Model 8052 DM) can be used. Besides, the polyetheretherketone (P1) has a melt viscosity of advantageously at most 1.00 kPa.s, preferably at most 0.50 kPa.s, more preferably at most 0.44 kPa.s at 400°C and a shear rate of 1000 $s^{-1}$, as measured using a capillary rheometer in accordance with ASTM D3835.

One well known in the art process to produce the polyetheretherketone (P1) comprises the step of reacting a usually substantially equimolar mixture of at least one bisphenol with at least one dihalobenzoid compound, and/or at least one halophenol compound (nucleophilic polycondensation reaction). A preferred bisphenol in such a process is p-hydroquinone ; a preferred dihalobenzoid compound in such a process is 4,4'-difluorobenzophenone ; a preferred halophenol compounds in such a process is 4-(4-fluorobenzoyl)phenol. Another well known in the art process to produce the polyetheretherketone (P1) comprises the step of electrophilically polymerizing phenoxyphenoxybenzoic acid or the like, using an alkane sulfonic acid as solvent and in the presence of a condensing agent. Polyetheretherketones are commercially available notably from Solvay Advanced Polymers, L.L.C. as KETASPIRE® PEEK and GATONE® PEEK.

The polyphenylsulfone (P2)

For the purpose of the invention, a polyphenylsulfone is intended to denote any polymer of which more than 50 wt. % of the recurring units are recurring units (R2) of formula

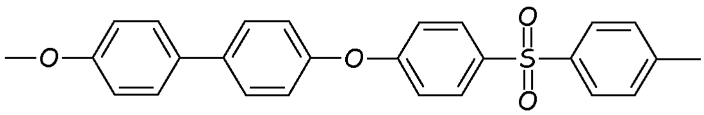

(1)

The polyphenylsulfone (P2) can be notably a homopolymer, a random, alternate or block copolymer. When the polyphenylsulfone (P2) is a copolymer, its recurring units can be notably composed essentially of recurring units (R2) of formula (1) and recurring units (R2*), different from recurring units (R2), of one or more formulae such as :

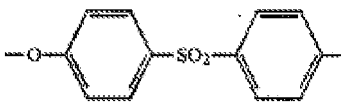

(2)

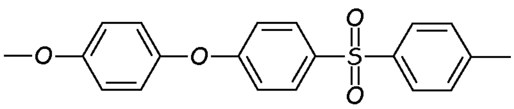

(3)

and/or

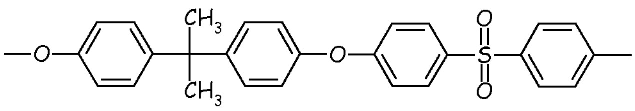

(4).

Preferably more than 70 wt. %, and more preferably more than 90 wt. % of the recurring units of the polyphenylsulfone (P2) are recurring units (R2). Still more preferably, the polyphenylsulfone (P2) is a homopolymer, i.e. essentially all, or even all, its recurring units are recurring units (R2).

An essential feature of the present invention is that the polyphenylsulfone (P2) has a melt flow of at least 20 g/10 min at 365 °C and under a load of 5.0 kg, as measured in accordance with ASTM method D1238 ; to measure said melt flow, a Tinius Olsen Extrusion Plastometer melt flow test apparatus can be used. The melt flow of the polyphenylsulfone (P2) at 365 °C and under a load of 5.0 kg, as measured in accordance with ASTM method D1238, is preferably of at least 22 g/10 min, more preferably of at least 25 g/10 min, still more preferably of at least 28 g/10 min, and the most preferably of at least 30 g/10 min. Besides, the melt flow of the polyphenylsulfone (P2) at 365 °C and under a load of 5.0 kg, as measured in accordance with ASTM method D1238, is generally of at most 100 g/10 min, preferably of at most 60 g/10 min, more preferably of at most 50 g/10 min, still more preferably of at most 40 g/10 min, and the most preferably of at most 35 g/10 min.

The polyphenylsulfone (P2) can be prepared by any method. One method well known in the art is described in U.S. Pat. No. 4,175,175. RADEL® R polyphenylsulfones from Solvay Advanced Polymers, L.L.C. are examples of commercially available polyphenylsulfones.

Optional ingredients of the polymer composition (C)

The polymer composition (C) can further contain one or more ingredients other than the polyetheretherketone (P1) and the polyphenylsulfone (P2).

For example, it can contain one or more usual additives of polyetheretherketone and polyphenylsulfone compositions, such as a colorant (e.g. a dye and/or a pigment, with dyes being preferred over pigments), an antioxidant, an acid scavenger, a heat stabilizer, an antioxidant, a flame retardant, a smoke-suppressing agent, an anti-static agent, an anti-blocking agent, and/or a processing aid such as an internal lubricant and/or an external lubricant.

Certain polymers other than the polyetheretherketone (P1) and the polyphenylsulfone (P2) can also be contained in the polymer composition (C). Their addition can be useful notably when the film (F) must meet certain particular requirements, as needed by certain special end uses. These optional additional polymers are profitably selected from the group consisting of polyarylethersulfones other than polyetheretherketones (for example, polyetherketones and polyetherketoneketones), polyarylethersulfones other than polyphenylsulfones (for example, bisphenol A polysulfones, polyethersulfones and polyetherethersulfones), polyetherimides, polyphenylene sulfides, polyphenylenes (preferably, kinked rigid-rod polyphenylenes) and mixtures thereof.

When one or more optional ingredients are present, their total weight, based on the total weight of polymer composition (C), is usually below 50 %, preferably below 20 %, and more preferably below 10 %.

<u>The essentially at most two-dimensional shaped article (A)</u>.

An essentially at most two-dimensional shaped article (A) comprising the polymer composition (C) as above described is also provided in accordance with the present invention.

From a practical point of view, any shaped article is three-dimensional, and can thus be characterized notably by three characteristic dimensions ("length", "width" and "height"). However, some shaped articles, such as films and filaments, are such that respectively one or two of their characteristic dimensions is (are) considerably lower than the other two ones or the third one. Here and wherever else used in the present description, the terms "considerably lower" should generally be understood as "more than 10 times lower", unless they characterize a "two-dimensional thickness" as defined hereafter in the description.

Precisely, for the purpose of the present invention an essentially two-dimensional shaped article is intended to denote a shaped article of which one of its characteristic dimensions ("thickness-height") is considerably lower than its other two ones ("width" and "length"), while an essentially one-dimensional shaped article is intended to denote a shaped article of which two out of its characteristic dimensions ("thickness-width" and "thickness-height") are considerably lower than its third one ("length"). Otherwise said, from a mathematic point of view, essentially two-dimensional articles have essentially the appearance of a geometric surface, while essentially one-dimensional articles have essentially the appearance of a geometric line. Thus, an essentially two-dimensional article can be viewed as a surface (with a certain length and a certain width) differing from a geometric surface in that it has a certain non-zero thickness (typically in a direction perpendicular to the surface), said non-zero thickness being however considerably lower than the square root of the surface area developed by the surface itself and, more precisely, said non-zero thickness being considerably lower than both the length and the width of the surface itself ; an essentially one-dimensional article can be viewed as a line (of a certain length) differing from a geometric line, essentially in that it has a non-zero "two-dimensional thickness" (typically in a plane perpendicular to the line, with a certain non-zero thickness-width and a certain non-zero thickness-height as characteristic dimensions), said non-zero two-dimensional thickness being however considerably lower (here specifically, the terms "considerably lower", which characterize a two-dimensional thickness, should generally be understood as "more than 100 times lower") than the square of the length of the line itself, more precisely, said non-zero thickness-width and said non-zero thickness-height being both considerably lower than the length of the line itself. The geometric surface can be curved or plane, twisted or untwisted ; the geometric line can be a straight line or a curved line.

Essentially zero-dimensional articles i.e. articles having essentially the appearance of a geometric point (sometimes also referred to as "material point"), with essentially no length, no width and no height, like powdery spherical particles of polymer or powdery spherical inorganic particles coated with a polymer (with a typical diameter of a few microns), are not shaped articles within the meaning of the present invention. Thus, within the meaning of the present invention, an essentially at most two-dimensional shaped article can be either an essentially two-dimensional shaped article or an essentially one-dimensional shaped article.

The thickness of a shaped article of regular or irregular volume can be defined as :

$$t = \int^{V} \tau(x,y,z)\, dx\, dy\, dz / V,$$

wherein x, y and z are the coordinates of an elementary volume dV (dV being equal to dx times dy times dz) of the shaped article of overall plain volume V, and $\tau$ is the local thickness.

The local thickness $\tau$, associated to a material point of coordinates (x,y,z), can be defined as the length of the shortest straight line D including the material point of concern which goes right through the shaped article (i.e. which goes from the material point where D enters the shaped article to the material point where D exits the shaped article).

In certain embodiments, the local thickness τ is substantially constant over the whole shaped article (A), i.e. each material point of the shaped article (A) has substantially the same thickness. The local thickness τ is often essentially constant or perfectly constant over the whole shaped article (A), i.e. respectively, each material point of the shaped article (A) has essentially the same or has exactly the same thickness.

The thickness of the shaped article (A) can be below 1 mm, below 100 mil, below 50 mil, below 20 mil, below 10 mil, below 5 mil or below 2 mil. Using the polymer composition (C) for manufacturing the shaped article (A) is particularly useful when said shaped article (A) has a thickness below 1.5 mil, preferably below 1.0 mil, more preferably of at most 0.75 mil, and still more preferably of at most 0.50 mil. The invention encompasses further a shaped article (A) having a thickness of at most 0.40 mil, or a shaped article (A) having a thickness of at most 0.30 mil. Besides, the thickness of the shaped article (A) exceeds advantageously a certain lower limit; indeed, it is observed that, when the shaped article (A) has a thickness below this lower limit, it is sometimes prone to tearing and hole formation. To fix the ideas, the lower limit is typically of about 0.05 mil when the shaped article (A) is an essentially two-dimensional article (such as a film) and typically of about 0.01 mil when the shaped article (A) is an essentially one-dimensional article (such as a filament). The shaped article (A) has a thickness of preferably at least 0.10 mil when the shaped article (A) is an essentially two-dimensional article (such as a film) and of preferably at least 0.05 mil when the shaped article (A) is an essentially one-dimensional article (such as a filament). The essentially at most two-dimensional shaped article (A) has a thickness of more preferably of at least 0.15 mil, and still more preferably of at least 0.20 mil.

A first preferred shaped article (A) is essentially two-dimensional. Said essentially two-dimensional article can be a hollow body or a film. The film can be either uncoated, or coated on an essentially two- or on a three-dimensional substrate. The essentially two- or the three-dimensional substrate can be a fabrics, a polymeric film, a sheet of paper, a wood or a metal component. In a certain embodiment, the shaped article (A) is a film composed of the polymer composition (C).

A second preferred shaped article (A) is essentially one-dimensional. Said essentially one-dimensional article can have the appearance of a cylinder-like plain volume the diameter of which is considerably lower than its length ; roughly speaking, it looks then like a "straight line with an extremely low diameter" ; such shaped article is commonly referred to as a filament. In a certain embodiment, the shaped article (A) is a filament composed of the polymer composition (C). Said essentially one-dimensional article can also be a coating coated on an essentially one-dimensional substrate, like an inorganic filament, a polymeric filament free of the polymer composition (C) or a metal.

The shaped article (A) can be manufactured by any method well known to the skilled in the art. The above described methods for manufacturing the film (F) will be profitably used for manufacturing the shaped article (A).

The invention will be further understood in the light of the additional explanations and examples provided in the work which is presented below.

Summary of the presented work

Polyetheretherketone (PEEK) is widely recognized as the leading semi-crystalline ultra performance polymer in the engineering polymers marketplace. However, one of the downsides of PEEK is its very high cost to the end user (~$40/lb). A PEEK-like material that can be available at lower cost than PEEK is therefore very attractive. PEEK blends with polyphenylsulfone (PPSU) can be utilized for this purpose as explained in patent application WO 2007/071780. PEEK is widely used in the form of thin extruded films. Film-based applications span a wide range of uses, including electrical/electronics, aerospace and other industrial uses. Films of PEEK/PPSU blends are also melt extrudable and so these blends can be available for film applications. However, film applications based on PEEK/PPSU blends have had a limitation until now, in that the film thicknesses that have been possible have been generally limited to thicknesses of 1.5 mil or higher. At thicknesses below 1.5 mil, and especially below 1.0 mil (1.0 mil = 25.4 μm), films made from PEEK/PPSU blends usually experience tearing during the extrusion process when taken to such thicknesses. The continual drive for weight reduction in the construction materials of commercial aircraft have made sub-mil thick films commercially attractive, so it is desirable to make sub-mil thickness films out of PEEK/PPSU blends. The work presented here reports on the results of efforts aimed at developing PEEK/PPSU blend systems that are easily extrudable to ultra-thin films, as low as 0.5 mil or 0.2 mil in thickness. This was achieved by simultaneously tuning the PPSU molecular weight in the blend to be sufficiently low while also maintaining the concentration of the PPSU in the blend below a certain threshold.

Background of the presented work

PEEK has been long recognized as an ultra-performance semi-crystalline polymer. The PEEK recurring units are of formula:

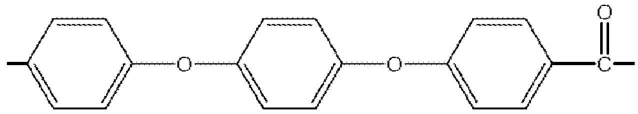

PEEK has a glass transition temperature of about 145 °C, a melting point of about 340 °C, and a crystallinity level that ranges from about 35% to about 50% depending on molecular weight.

PPSU is a high-performance completely amorphous engineering polymer. The PPSU recurring units are of formula :

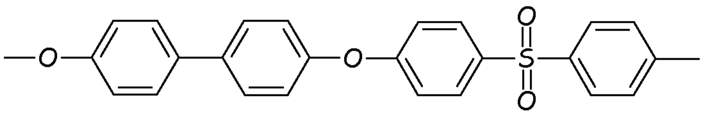

PPSU has a glass transition temperature of about 220 °C. One of the main attractive attributes of PPSU is that it has low notch sensitivity (i.e. super-tough impact) performance, of which a notched Izod impact value of about 13 ft-lb/in (690 J/m) is one manifestation.

PEEK/PPSU blends have been discussed extensively in the patent literature. The blends offer a balance of properties which includes: higher elongation and impact resistance than comparable PEEK grades, as well as higher heat deflection temperatures for unfilled systems. Table 1 lists some basic properties of high melt flow PEEK (KetaSpire® KT-880 NT PEEK from Solvay Advanced Polymers) and a 60/40 by weight blend of KetaSpire®KT-880 NT PEEK with Radel® R-5000 NT PPSU, also supplied by Solvay Advanced Polymers.

**Table 1**

Typical properties of KetaSpire® KT-880 NT PEEK, Radel® R-5000 NT PPSU and a 60/40 PEEK/PPSU blend composed of these two polymers

| | **KetaSpire® KT-880 NT PEEK** | **60/40 Blend KT-880 NT/ R-5000 NT** | **Radel® R-5000 NT PPSU** |
|---|---|---|---|
| Tensile Strength at Yield (psi) | 14500 | 12500 | 10100 |
| Tensile Modulus (kpsi) | 530 | 425 | 340 |
| Tensile Elongation at Yield (%) | 5.2 | 6.2 | 7.2 |
| Tensile Elongation at Break (%) | 10-20 | 30-90 | 60-120 |
| Flexural Strength (psi) | 21200 | 17700 | 15200 |
| Flexural Modulus (kpsi) | 550 | 440 | 350 |
| Notched Izod Impact (ft-lb/in) | 1.0 | 1.6 | 13.0 |
| Un-notched Izod Impact (ft-lb/in) | No Break | No Break | No Break |
| Melt Flow [400 C, 2.16 kg wt.] (g/10 min) | 36 | 28 | 17 |
| Heat Deflection Temperature (°C) | 160 | 192 | 207 |
| Specific Gravity | 1.30 | 1.30 | 1.29 |

This table illustrates the performance benefits of the PEEK/PPSU blend wherein the blend retains a combination of high strength stiffness and chemical resistance, with ductility and a heat deflection temperature that are more similar to those of PPSU. One of the key features of the blends when prepared at a "high" PEEK/PPSU ratio, i.e. generally of 60/40 or higher, is that they retain most of the chemical resistance performance exhibited by PEEK. This phenomenon is expounded in patent Application WO 2007/071780. The chemical resistance of the PEEK-rich blends to a broad range of organic solvents is much higher than that exhibited by PPSU and also higher than what would be expected from the weighted average of the two components.

It would be desirable to take advantage of the performance properties and attributes of the PEEK/PPSU blends described above in thin film form. It has been found that blends of PEEK and PPSU are generally melt extrudable into

films of thicknesses of 1.5 mil and higher. On the other hand, at thicknesses below 1.5 mil, and especially below 1.0 mil, it becomes difficult to keep the film web from tearing or forming holes during extrusion. This was found to be the case regardless of the PEEK molecular weight/melt viscosity used in the PEEK/PPSU blend. PEEK viscosities in the nominal range: 0.15 - 0.44 kPa-s at 400 °C and a nominal shear rate of 1000 $s^{-1}$ (as measured in accordance with ASTM method D3835) were initially used in PEEK/PPSU blends of a PEEK/PPSU ratio around 60/40 and none of these formulations were possible to extrude at thicknesses below 1.5 mil, and especially below 1.0 mil, without breakage in the film web. This study was aimed at exploring ways to modify these PEEK/PPSU blends so as to make melt extrusion of films at thicknesses well below 1.5 mil possible.

Experimental.

A series of five blend formulations for this study (compositions shown in Table 2) was produced by melt compounding on a Berstorff 25-mm twin screw co-rotating intermeshing extruder having an L/D ratio of 40 using compounding conditions as shown in Table 3.

**Table 2.** PEEK/PPSU Blend formulations screened for extrudability into 0.5 mil thick film

| **Blend No. →** | **1** | **2** | **3** | **4** | **5** |
|---|---|---|---|---|---|
| **PEEK, KetaSpire® KT-820NT** | 63.0 | 71.5 | 80.0 | 80.0 | 80.0 |
| **PPSU, Radel® R-5000 NT** | 37.0 | --- | 20.0 | --- | --- |
| **PPSU, Radel® R-5800 NT** | --- | 28.5 | --- | 20.0 | --- |
| **PPSU, Radel® R-5900 NT** | --- | --- | --- | --- | 20.0 |
| **Tests** | **1** | **2** | **3** | **4** | **5** |
| Tensile Yield Strength (psi) | 11900 | 12200 | 12600 | 12600 | 12500 |
| Tensile Modulus (kpsi) | 415 | 439 | 460 | 456 | 454 |
| Tensile Yield Elongation (%) | 6.4 | 6.0 | 5.8 | 5.8 | 5.7 |
| Tensile Elongation at Break (%) | 87 [9] | 94 [11] | 93 [6] | 89 [4] | 86 [7] |
| Notched Izod (ft-lb/in) | 2.04 [0.07] | 1.67 [0.13] | 1.65 [0.08] | 1.56 [0.03] | 1.58 [0.07] |
| No Notch Izod (ft-lb/in) | NB | NB | NB | NB | NB |
| HDT [annealed at 200°C for 2 hr] (C) | 196 [0.4] | 182 [3.2] | 172 [3.8] | 169 [1.8] | 172 [1.5] |
| Melting Point, Tm (°C) | 337.0 | 338.3 | 338.1 | 338.3 | 339.1 |
| Crystallization Temp., Tc (°C) | 282.5 | 284.2 | 284.5 | 284.0 | 284.6 |
| Heat of Fusion (J/g) | 26.1 | 34.7 | 35.5 | 33.3 | 37.9 |
| % Crystallinity - Apparent | 21.3 | 28.3 | 29.0 | 27.2 | 30.9 |
| % Crystallinity - Normalized to % PEEK | 33.8 | 39.5 | 36.3 | 34.0 | 38.6 |
| Nominal 0.5 mil Thick Extruded Film Quality* | Poor | Good | Good | Excellent | Excellent |
| Extruded film quality key:<br>Poor = many tears in film<br>Good = very few tears occurring at location of black speck contamination<br>Excellent = No tears observed throughout the run<br>Note: values in brackets are standard deviations for some of the mechanical properties. Where standard deviations are not listed, the standard deviation is less than 3% of the mean property value reported. | | | | | |

**Table 3**

| Compounding conditions for PEEK/PPSU blend formulations shown in Table 2. Extruder: twin-screw corotating intermeshing 25 mm extruder with eight barrel sections and L/D = 40. | | | | | | |
|---|---|---|---|---|---|---|
| **Blend No. →** | **Set Point (°C)** | **Actual Readings Blend 1** | **Actual Readings Blend 2** | **Actual Readings Blend 3** | **Actual Readings Blend 4** | **Actual Readings Blend 5** |
| Barrel 2 | 340 | 337 | 340 | 337 | 340 | 340 |
| Barrel 3 | 340 | 339 | 340 | 339 | 340 | 339 |
| Barrel 4 | 340 | 340 | 339 | 339 | 339 | 339 |
| Barrel 5 | 340 | 336 | 338 | 338 | 337 | 340 |
| Barrel 6 | 340 | 341 | 339 | 342 | 340 | 341 |
| Barrel 7 | 340 | 342 | 340 | 342 | 341 | 343 |
| Barrel 8 | 340 | 342 | 341 | 342 | 341 | 342 |
| Adapter | 350 | 353 | 350 | 351 | 349 | 350 |
| Die | 350 | 344 | 347 | 344 | 348 | 348 |
| Melt Temperature, handheld probe (°C) | --- | 395 | 394 | 389 | 392 | 392 |
| Die Pressure (psi) | 158-166 | 159 | 158 | 154 | 158 | 166 |
| Vacuum (in Hg) on Barrel 7 | --- | 22 | 22 | 23 | 23 | 23 |
| Screw Speed (RPM) | 160 | 160 | 160 | 160 | 160 | 160 |
| Drive Amp Draw (Max allowable = 12) | --- | 7 | 7 | 8 | 7 | 7 |
| Throughput Rate | 18-20 | 18 | 20 | 20 | 20 | 20 |

The five blends utilized different loading levels (wt. %) of PPSU as well as different molecular weight grades (represented by melt flow grades) of PPSU. The five blend compositions are listed in Table 2. The three different nominal melt flows (as measured at 365 °C and a load of 5.0 kg in accordance with ASTM method D1238, using a Tinius Olsen Extrusion Plastometer melt flow test apparatus) of the three PPSU grades used were as follows:

- Radel® R-5000 NT PPSU : MF = 17 g/10 min
- Radel® R-5800 NT PPSU : MF = 25 g/10 min
- Radel® R-5900 NT PPSU : MF = 31 g/10 min

The weight % of the PPSU in the blend ranged from 37% to 20% as can be seen from the formulations described in Table 2.

The mechanical properties of the five blends prepared were tested according to ASTM standards using 1/8 inch thick test specimens. For tensile testing, 8.5 inch long Type I specimens were employed. The various ASTM tests employed were the following:

- Tensile strength, modulus, yield and break elongations: D638
- Notched Izod impact: D256
- No Notch Izod impact: D4812
- Heat deflection temperature (HDT): D648

For HDT testing, the test specimens were annealed at 200 °C for 2 hours prior to testing to assure that the samples were fully crystallized and free of molded-in stresses.

Additionally, the crystalline phase properties of the blend - melting point, heat of fusion and crystallization temperature - were measured for the five blends by differential scanning calorimetry (DSC) to ensure that the blends still had a level of crystallinity commensurate with the PEEK concentration in the respective blends. The DSC analysis was conducted on compounded pellets as two heating cycles and one cooling cycle in between. All heating and cooling was performed at 20 °C/min. The first heat was not used as part of the characterization and was done merely to erase the prior thermal history of the samples. Estimated % crystallinity in the blends is based on a theoretical heat of fusion of 122.5 J/g for 100% crystalline PEEK, as taught in A.A. Mehmet-Alkan and J.N. Hay, Polymer, 34 (1993), p. 3529. Both the overall/apparent crystallinity in each blend, as well as the crystallinity in the PEEK component of the blend (normalized to PEEK wt. %), was calculated for each blend formulation.

Ultra-thin film was melt extruded from each blend formulation on a 1.25 in single screw Sterling extruder having an L/D of 20 and equipped with a 14 in wide T-type film die having an adjustable gap.

Oil heated chill rolls were used for film take-up from the die and drawing. Details of the extrusion conditions can be found in Table 4.

**Table 4** Extrusion process parameters used in producing 0.5 mil nominal thickness film of various PEEK/PPSU Blends

| *Extruder Temperatures* | *Set Point (°F)* | *Actual (°F)* |
|---|---|---|
| Zone 1: | 675 | 661 |
| Zone 2: | 675 | 672 |
| Zone 3: | 675 | 669 |
| Zone 4: | 675 | 671 |
| *Die Head Temperatures* | *Set Point (°F)* | *Actual (°F)* |
| Zone 1/Adapter: | 675 | 667 |
| Zone 2: | 685 | 666 |
| Zone 3: | 665 | 660 |
| Zone 4: | 685 | 669 |
| *Other Process Parameters* | *Set Point* | *Actual* |
| Die Pressure (psi) | | 1240 |
| Extruder RPM | 18 | 18 |
| Speed setting on heated rolls (%) | 100 | 100 |
| Top Chill Roll Temperature (°F) | 250 | |
| Middle Chill Roll Temperature (°F) | 325 | |
| Bottom Chill Roll Temperature (°F) | 340 | |
| Take Up Roll Setting (Arbitrary units) | 3.0 | |
| Web Rate (ft/sec) | | 0.37 |
| Other Conditions : Extruder: Sterling 1.25" diameter, 20:1 L/D<br>14" adjustable gap T-die - Oil heated chill rolls | | |

The quality of the 0.5 mil film produced for each formulation was visually assessed and a rating of: excellent, good or poor was given based on the number of tears and/or hole defects that were seen in the extruded film web of each formulation. Additional qualitative description of the significance of each of these ratings is given under Table 2.

Results and Discussion.

The mechanical properties of all five blend formulations are excellent and generally on par with those of the originally utilized formulation of blend 1. Notably, all formulations exhibit very high elongations at break, on average > 85%. These are all much more ductile materials relative to PEEK, which offers elongations of typically 20-30% under

the same test conditions. The only property that is slightly reduced for blends 2-5 relative to blend 1 is the heat deflection temperature. The drop in HDT is a result of reducing the content of the high Tg component (PPSU) in the blend. The melting point is about the same for all formulations while the apparent % crystallinity is somewhat higher, as expected, for the four formulations containing less than 30% PPSU. This bodes well for the chemical resistance of the four alternate formulations being at least as good as the original formulation, and, most likely, higher than that of the original formulation. The crystallization temperature is essentially unchanged across the board, indicating the crystallization kinetics of all these blends are about the same, while there is a hint that the four alternate blends with lower PEEK loading than 30% exhibit slightly higher rates of crystallization as evidenced by the slightly higher crystallization peak temperature for these four blends.

The formulations were extruded into 0.5 mil nominal thickness films in the numerical sequence of the blend numbers themselves. What was observed was that the film quality (equated with absence of holes and tears for the purpose of this paper) improved progressively as the run sequence progressed from blend 1 to blend 5, with the most dramatic improvement being noted in going from blend 1 to blend 2. Blend 1 was of clearly poor quality at 0.5 mil thickness as the film was riddled with large elliptical holes, each being several inches in length and several inches wide. Blends 2 and 3 represented a dramatic improvement in the resistance of the extruded film web to tearing and to large holes. In the case of these two formulations, the films only contained the presence of occasional coin sized holes at the locations were black specks or large gels were present in the film. The frequency of holes/tears for the film from blends 2 and 3 were reduced from the case of blend 1 by about 20-50 fold, so this was clearly a quantum leap in extrudability performance and these two formulations were assigned the ultra-thin film extrudability rating of "good." The frequency of these holes was further reduced down to "zero" when blend formulations 4 and 5 were introduced and extruded. These two blends were thus given the ultra-thin film extrudability film quality rating of "Excellent."

Thus, the move to higher PEEK content and to higher PPSU melt flows (lower molecular weights) resulted unexpectedly in major improvements in ultra-thin film extrudability and quality. Without binding ourselves to any complex theory, we *postulate* the following two phenomena to be possibly working in concert as contributors toward reduced film web breakage at ultra-thin film thicknesses below 1.0 mil. These are the following:

1. The PEEK/PPSU blend is a two-phase blend. Higher PEEK content in the blend could lead to a reduced total interfacial area between PEEK and PPSU phase domains. When the two phases in the blend are drawn in the high draw ratios intended to reduce the film thickness to sub-mil levels, they could build less interfacial stress from the elongated phase domains than would be the case for polymer blend ratios closer to 50/50 where this effect is maximized. The reduced interfacial stress build up by virtue of the reduced population of the thermodynamically unfavorable elongated phase domains could contribute to less tensile stress build up in the film during draw down and consequently less web breakage.
2. Higher PPSU melt flows could contribute to two favorable aspects that minimize film web breakage. The first is simply that higher flow PPSU could have shorter relaxation times during film drawing than low flow (higher molecular weight) analogs. The shorter relaxation times could dissipate drawing stresses in the film web protecting it against tears and hole formation. Secondly, the lower molecular weight PPSU could promote lower free energy of mixing for the blend by virtue of the increased entropy of mixing that is possible at lower molecular weights. The reduced free energy of mixing could contribute to reduced domain sizes and reduced surface tension between the phases which in turn leads to a lower level of stress buildup during drawing at sub-mil thicknesses.

Key features of ultra-thin films from PEEK/PPSU blends include the following possible advantages over pure PEEK film:

- Increased ductility and toughness for better puncture resistance
- Increased adhesion to substrates by virtue of the lower crystallinity
- Increased flammability resistance
- Increased transparency and gloss
- Improved economics
- Sub-mil thick films from PEEK/PPSU blends such as those described in this paper can be utilized in a wide range of industrial applications. Typical applications include capacitors, electrical insulation, flexible circuitry substrates, composite film layers, specialty laminates, moisture barriers, liners, and aerospace films, such as thermal acoustical insulation blanket bagging materials.

<u>Conclusions.</u>

PEEK/PPSU blend compositions were rendered melt extrudable into ultra-thin films of nominal thickness of well below 1.5 mil. This was accomplished by the simultaneous tuning of the PEEK/PPSU polymer blend ratio and the

molecular weight of the PPSU component. It was found that to achieve extrudability of this type of blend system into thicknesses below 1.5 mil, and especially below 1.0 mil, it is necessary to maintain the PPSU content in the blend at about 35 wt.% or less and the melt flow of the PPSU component at about 20 g/10 min or more (as measured at 400 °C and a load of 2.16 kg). More preferable combinations for more optimal extrudability and film quality place the constraints on the PPSU content of the blend at 31 % or less (preferably, at 27% or less) and the melt flow at 25 g/10 min or more (preferably, at 28 g/10 min or more) while the PPSU melt flow should preferably not exceed 50 g/10 min - more preferably not exceed 40 g/10 min - so as to maintain high mechanical properties in the blend.

All references, patents, applications, tests, standards, documents, publications, brochures, texts, articles, etc. mentioned herein are incorporated herein by reference. Where a numerical limit or range is stated, all values and subranges within a numerical limit or range are specifically included as if explicitly written out.

The above description is presented to enable a person skilled in the art to make and use the invention, and is provided in the context of a particular application and its requirements. Various modifications to the preferred embodiments will be readily apparent to those skilled in the art, and the generic principles defined herein may be applied to other embodiments and applications without departing from the spirit and scope of the invention. Thus, this invention is not intended to be limited to the embodiments shown, but is to be accorded the widest scope consistent with the principles and features disclosed herein.

## Claims

1. A polymer composition (C) comprising a polyetheretherketone (P1) and a polyphenylsulfone (P2), wherein

    - the polyphenylsulfone (P2) is a polymer of which more than 50 wt. % of the recurring units are recurring units (R2) of following formula

    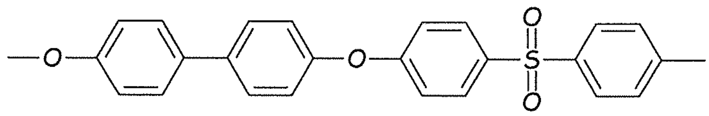

    - the weight of the polyphenylsulfone (P2), based on the total weight of the polyetheretherketone (P1) and the polyphenylsulfone (P2), is of at least 5 % and of at most 35 %, and,
    - the polyphenylsulfone (P2) has a melt flow of at least 20 g/10 min at 365°C and under a load of 5.0 kg, as measured in accordance with ASTM method D1238.

2. The polymer composition according to claim 1, **characterized in that** the combined weight of the polyetheretherketone (P1) and the polyphenylsulfone (P2), based on the total weight of the polymer composition (C), is greater than 90 %.

3. The polymer composition according to according to claim 1 or 2, **characterized in that** the weight of the polyphenylsulfone (P2), based on the total weight of the polyetheretherketone (P1) and the polyphenylsulfone (P2), is of at least 15 % and of at most 27 %.

4. The polymer composition according to according to any one of the preceding claims, **characterized in that** the polyetheretherketone (P1) is a homopolymer of which essentially all the recurring units are recurring units (R1) of formula:

    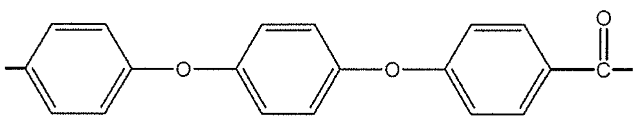

    and the polyphenylsulfone (P2) is a homopolymer of which essentially all the recurring units are recurring units (R2) of formula :

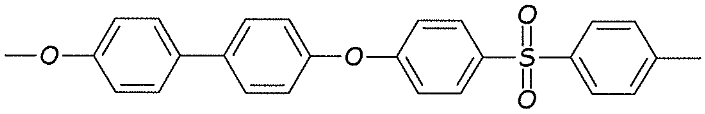

**5.** The polymer composition according to any one of the preceding claims, **characterized in that** the polyetheretherketone (P1) has a melt viscosity of at least 0.25 kPa.s and of at most 0.50 kPa.s at 400°C and a shear rate of 1000 $s^{-1}$ as measured using a capillary rheometer in accordance with ASTM D3835.

**6.** The polymer composition according to according to any one of the preceding claims, **characterized in that** the polyphenylsulfone (P2) has a melt flow of at least 25 g/10 min at 365°C and under a load of 5.0 kg, as measured in accordance with ASTM method D1238.

**7.** The polymer composition according to any one of the preceding claims, **characterized in that** the polyphenylsulfone (P2) has a melt flow of at most 50 g/10 min at 365°C and under a load of 5.0 kg, as measured in accordance with ASTM method D1238.

**8.** The polymer composition according to any one of the preceding claims, **characterized in that**:

- the polyetheretherketone (P1) is a homopolymer of which essentially all the recurring units are recurring units (R1) of formula :

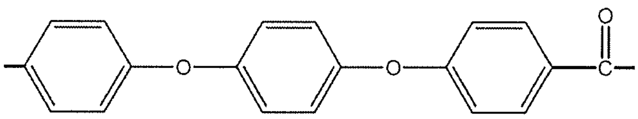

and has a melt viscosity of from 0.25 kPa.s to 0.50 kPa.s at 400°C and a shear rate of 1000 $s^{-1}$ as measured using a capillary rheometer in accordance with ASTM D3835,
- the polyphenylsulfone (P2) is a homopolymer of which essentially all the recurring units are recurring units (R2) of formula :

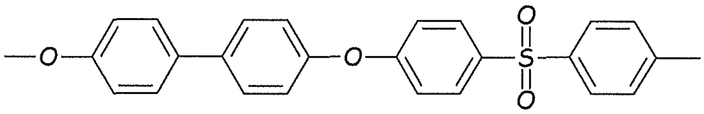

and has a melt flow of from 20 g/10 min to 40 g/10 min at 365°C and under a load of 5.0 kg, as measured in accordance with ASTM method D1238,
- the weight of the polyphenylsulfone (P2), based on the total weight of the polyetheretherketone (P1) and the polyphenylsulfone (P2), ranges from 15 % to 27 %, and
- the combined weight of the polyetheretherketone (P1) and the polyphenylsulfone (P2), based on the total weight of the polymer composition (C), is greater than 90 %.

**9.** A film (F) having a thickness of below 38.1 μm (1.5 mil) composed of the polymer composition (C) according to any one of the preceding claims.

**10.** The film according to claim 9, which has a thickness of at least 2.5 μm (0.10 mil) and below 25.4 μm (1.0 mil).

**11.** The film according to claim 9 or 10, which has a thickness of at most 12.7 μm (0.50 mil).

**12.** The film according to claim 9, 10 or 11, which has a thickness of at least 5.1 μm (0.20 mil).

**13.** The film according to claim 9, **characterized in that**:

- it has a thickness of from 5.1 μm (0.20 mil) to 12.7 μm (0.50 mil),
- the polyetheretherketone (P1) is a homopolymer of which essentially all the recurring units are recurring units (R1) of formula :

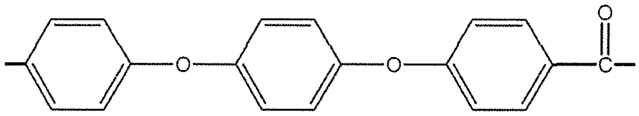

and has a melt viscosity of from 0.25 kPa.s to 0.50 kPa.s at 400°C and a shear rate of 1000 $s^{-1}$ as measured using a capillary rheometer in accordance with ASTM D3835,
- the polyphenylsulfone (P2) is a homopolymer of which essentially all the recurring units are recurring units (R2) of formula :

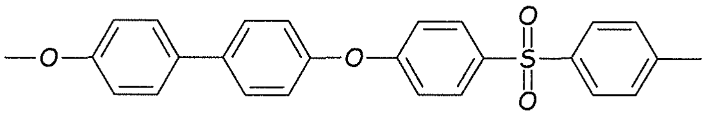

and has a melt flow of from 20 g/10 min to 40 g/10 min at 365°C and under a load of 5.0 kg, as measured in accordance with ASTM method D1238,
- the weight of the polyphenylsulfone (P2), based on the total weight of the polyetheretherketone (P1) and the polyphenylsulfone (P2), ranges from 15 % to 27 %, and
- the combined weight of the polyetheretherketone (P1) and the polyphenylsulfone (P2), based on the total weight of the polymer composition (C), is greater than 90 %.

**14.** A method for manufacturing the film according to any one of claims 9 to 13, said method comprising melt extruding the polymer composition (C).

**15.** The method according to claim 14, **characterized in that**:

- an extruder comprising a die is used,
- the polymer composition (C) exits the die,
- the polymer composition (C) is a melt when it exits the die, and
- the temperature of the melt when it exits the die is of at least 370°C and of at most 400°C.

**Patentansprüche**

**1.** Polymerzusammensetzung (C), umfassend ein Polyetheretherketon (P1) und ein Polyphenylsulfon (P2), wobei

- das Polyphenylsulfon (P2) ein Polymer ist, bei dem mehr als 50 Gew.- % der Wiederholungseinheiten Wiederholungseinheiten (R2) der folgenden Formel sind :

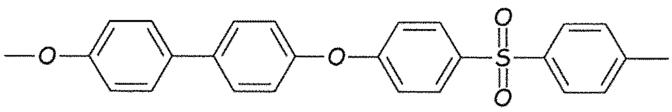

- das Gewicht des Polyphenylsulfons (P2), bezogen auf das Gesamtgewicht des Polyetheretherketons (P1) und des Polyphenylsulfons (P2), wenigstens 5 % und höchstens 35 % beträgt und
- das Polyphenylsulfon (P2) einen Schmelzfluss von wenigstens 20 g/10 min bei 365°C unter einer Last von 5,0 kg aufweist, wie gemessen gemäß dem ASTM-Verfahren D1238.

**2.** Polymerzusammensetzung gemäß Anspruch 1, **dadurch gekennzeichnet, dass** das kombinierte Gewicht des Polyetheretherketons (P1) und des Polyphenylsulfons (P2), bezogen auf das Gesamtgewicht der Polymerzusammensetzung (C), größer als 90 % ist.

**3.** Polymerzusammensetzung gemäß Anspruch 1 oder 2, **dadurch gekennzeichnet, dass** das Gewicht des Polyphenylsulfons (P2), bezogen auf das Gesamtgewicht des Polyetheretherketons (P1) und des Polyphenylsulfons (P2), wenigstens 15 % und höchstens 27 % beträgt.

4. Polymerzusammensetzung gemäß einem der vorstehenden Ansprüche, **dadurch gekennzeichnet, dass** das Polyetheretherketon (P1) ein Homopolymer ist, bei dem im Wesentlichen alle Wiederholungseinheiten Wiederholungseinheiten (R1) der Formel:

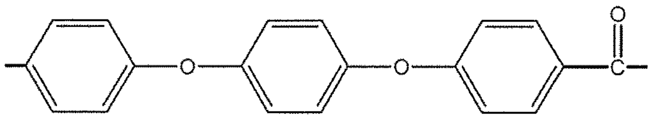

sind und das Polyphenylsulfon (P2) ein Homopolymer ist, bei dem im Wesentlichen alle Wiederholungseinheiten Wiederholungseinheiten (R2) der Formel:

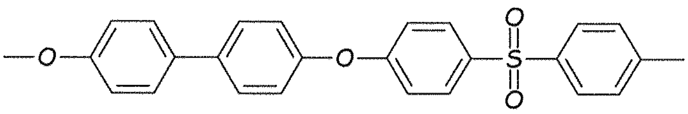

sind.

5. Polymerzusammensetzung gemäß einem der vorstehenden Ansprüche, **dadurch gekennzeichnet, dass** das Polyetheretherketon (P1) eine Schmelzviskosität von wenigstens 0,25 kPa.s und höchstens 0,50 kPa.s bei 400°C und einer Scherrate von 1000 $s^{-1}$ aufweist, wie gemessen unter Verwendung eines Kapillarrheometers gemäß ASTM D3835.

6. Polymerzusammensetzung gemäß einem der vorstehenden Ansprüche, **dadurch gekennzeichnet, dass** das Polyphenylsulfon (P2) einen Schmelzfluss von wenigstens 25 g/10 min bei 365°C unter einer Last von 5,0 kg aufweist, wie gemessen gemäß dem ASTM-Verfahren D1238.

7. Polymerzusammensetzung gemäß einem der vorstehenden Ansprüche, **dadurch gekennzeichnet, dass** das Polyphenylsulfon (P2) einen Schmelzfluss von höchstens 50 g/10 min bei 365°C unter einer Last von 5,0 kg aufweist, wie gemessen gemäß dem ASTM-Verfahren D1238.

8. Polymerzusammensetzung gemäß einem der vorstehenden Ansprüche, **dadurch gekennzeichnet, dass** :

- das Polyetheretherketon (P1) ein Homopolymer ist, bei dem im Wesentlichen alle Wiederholungseinheiten Wiederholungseinheiten (R1) der Formel:

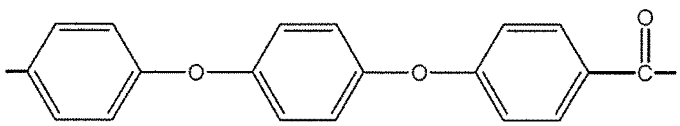

sind und das eine Schmelzviskosität von 0,25 kPa.s bis 0,50 kPa.s bei 400°C und einer Scherrate von 1000 $s^{-1}$ aufweist, wie gemessen unter Verwendung eines Kapillarrheometers gemäß ASTM D3835,
- das Polyphenylsulfon (P2) ein Homopolymer ist, bei dem im Wesentlichen alle Wiederholungseinheiten Wiederholungseinheiten (R2) der Formel:

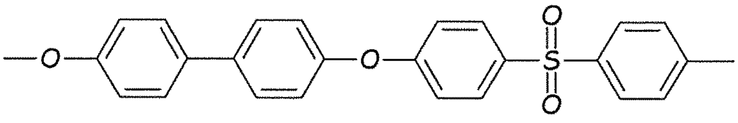

sind und das einen Schmelzfluss von 20 g/10 min bis 40 g/10 min bei 365°C unter einer Last von 5,0 kg aufweist, wie gemessen gemäß dem ASTM-Verfahren D1238,
- das Gewicht des Polyphenylsulfons (P2), bezogen auf das Gesamtgewicht des Polyetheretherketons (P1) und des Polyphenylsulfons (P2), in dem Bereich von 15 % bis 27 % liegt und
- das kombinierte Gewicht des Polyetheretherketons (P1) und des Polyphenylsulfons (P2), bezogen auf das Gesamtgewicht der Polymerzusammensetzung (C), größer als 90 % ist.

**9.** Film (F) mit einer Dicke von unter 38,1 μm (1,5 mil), bestehend aus der Polymerzusammensetzung (C) gemäß einem der vorstehenden Ansprüche.

**10.** Film gemäß Anspruch 9, der eine Dicke von wenigstens 2,5 μm (0,10 mil) und unter 25,4 μm (1,0 mil) aufweist.

**11.** Film gemäß Anspruch 9 oder 10, der eine Dicke von höchstens 12,7 μm (0,50 mil) aufweist.

**12.** Film gemäß Anspruch 9, 10 oder 11, der eine Dicke von wenigstens 5,1 μm (0,20 mil) aufweist.

**13.** Film gemäß Anspruch 9, **dadurch gekennzeichnet, dass** :

- er eine Dicke von 5,1 μm (0,20 mil) bis 12,7 μm (0,50 mil) aufweist,
- das Polyetheretherketon (P1) ein Homopolymer ist, bei dem im Wesentlichen alle Wiederholungseinheiten Wiederholungseinheiten (R1) der Formel:

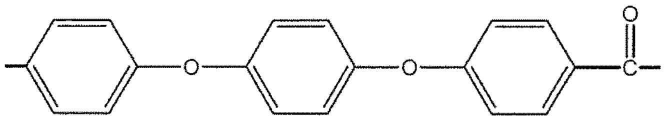

sind und das eine Schmelzviskosität von 0,25 kPa.s bis 0,50 kPa.s bei 400°C und einer Scherrate von 1000 $s^{-1}$ aufweist, wie gemessen unter Verwendung eines Kapillarrheometers gemäß ASTM D3835,
- das Polyphenylsulfon (P2) ein Homopolymer ist, bei dem im Wesentlichen alle Wiederholungseinheiten Wiederholungseinheiten (R2) der Formel:

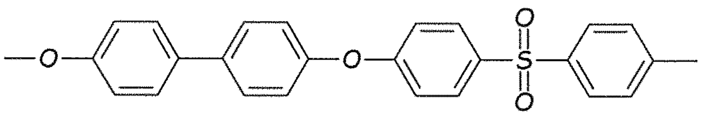

sind und das einen Schmelzfluss von 20 g/10 min bis 40 g/10 min bei 365°C unter einer Last von 5,0 kg aufweist, wie gemessen gemäß dem ASTM-Verfahren D1238,
- das Gewicht des Polyphenylsulfons (P2), bezogen auf das Gesamtgewicht des Polyetheretherketons (P1) und des Polyphenylsulfons (P2), in dem Bereich von 15 % bis 27 % liegt und
- das kombinierte Gewicht des Polyetheretherketons (P1) und des Polyphenylsulfons (P2), bezogen auf das Gesamtgewicht der Polymerzusammensetzung (C), größer als 90 % ist.

**14.** Verfahren zum Herstellen des Films gemäß einem der Ansprüche 9 bis 13, wobei das Verfahren Schmelzextrudieren der Polymerzusammensetzung (C) umfasst.

**15.** Verfahren gemäß Anspruch 14, **dadurch gekennzeichnet, dass** :

- ein Extruder verwendet wird, der eine Düse umfasst,
- die Polymerzusammensetzung (C) aus der Düse austritt,
- die Polymerzusammensetzung (C) eine Schmelze ist, wenn sie aus der Düse austritt, und
- die Temperatur der Schmelze, wenn die aus der Düse austritt, wenigstens 370°C und höchsten 400°C beträgt.

## Revendications

**1.** Composition de polymère (C) comprenant une polyétheréthercétone (P1) et une polyphénylsulfone (P2), dans laquelle

- la polyphénylsulfone (P2) est un polymère dont plus de 50 % en poids des motifs récurrents sont des motifs récurrents (R2) de formule suivante

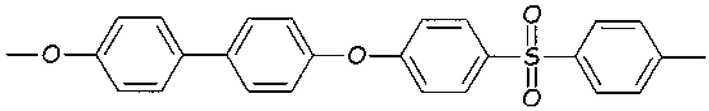

- le poids de la polyphénylsulfone (P2), sur la base du poids total de la polyétheréthercétone (P1) et de la polyphénylsulfone (P2), est d'au moins 5 % et d'au plus 35 %, et,
- la polyphénylsulfone (P2) a un indice de fluidité d'au moins 20 g/10 min à 365°C et sous une charge de 5,0 kg, tel que mesuré selon le procédé ASTM D1238.

**2.** Composition de polymère selon la revendication 1, **caractérisée en ce que** le poids combiné de la polyétheréthercétone (P1) et de la polyphénylsulfone (P2), sur la base du poids total de la composition de polymère (C), est supérieur à 90 %.

**3.** Composition de polymère selon la revendication 1 ou 2, **caractérisée en ce que** le poids de la polyphénylsulfone (P2), sur la base du poids total de la polyétheréthercétone (P1) et de la polyphénylsulfone (P2), est d'au moins 15 % et d'au plus 27 %.

**4.** Composition de polymère selon l'une quelconque des revendications précédentes, **caractérisée en ce que** la polyétheréthercétone (P1) est un homopolymère dont pratiquement tous les motifs récurrents sont des motifs récurrents (R1) de formule :

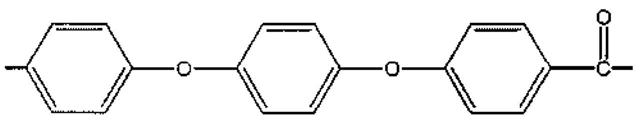

et la polyphénylsulfone (P2) est un homopolymère dont pratiquement tous les motifs récurrents sont des motifs récurrents (R2) de formule :

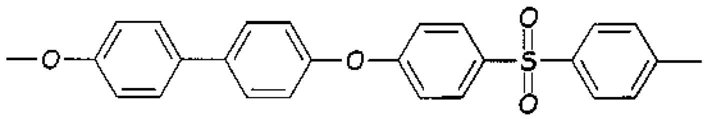

.

**5.** Composition de polymère selon l'une quelconque des revendications précédentes, **caractérisée en ce que** la polyétheréthercétone (P1) a une viscosité à l'état fondu d'au moins 0,25 kPa.s et d'au plus 0,50 kPa.s à 400°C et un taux de cisaillement de 1000 $s^{-1}$ telle que mesurée au moyen d'un rhéomètre capillaire selon l'ASTM D3835.

**6.** Composition de polymère selon l'une quelconque des revendications précédentes, **caractérisée en ce que** la polyphénylsulfone (P2) a un indice de fluidité d'au moins 25 g/10 min à 365°C et sous une charge de 5,0 kg, tel que mesuré selon le procédé ASTM D1238.

**7.** Composition de polymère selon l'une quelconque des revendications précédentes, **caractérisée en ce que** la polyphénylsulfone (P2) a un indice de fluidité d'au plus 50 g/10 min à 365°C et sous une charge de 5,0 kg, tel que mesuré selon le procédé ASTM D1238.

**8.** Composition de polymère selon l'une quelconque des revendications précédentes, **caractérisée en ce que** :

- la polyétheréthercétone (P1) est un homopolymère dont pratiquement tous les motifs récurrents sont des motifs récurrents (R1) de formule :

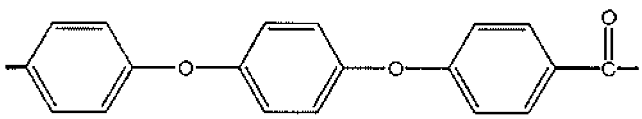

et présente une viscosité à l'état fondu de 0,25 kPa.s à 0,50 kPa.s à 400°C et un taux de cisaillement de 1000 $s^{-1}$ telle que mesuré au moyen d'un rhéomètre capillaire selon l'ASTM D3835,
- la polyphénylsulfone (P2) est un homopolymère dont pratiquement tous les motifs récurrents sont des motifs récurrents (R2) de formule :

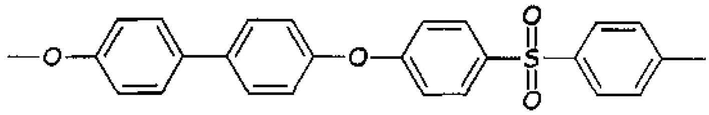

et a un indice de fluidité de 20 g/10 min à 40 g/10 min à 365°C et sous une charge de 5,0 kg, tel que mesuré selon le procédé ASTM D1238,
- le poids de la polyphénylsulfone (P2), sur la base du poids total de la polyétheréthercétone (P1) et la polyphénylsulfone (P2), est dans la plage de 15% à 27%, et
- le poids combiné de la polyétheréthercétone (P1) et la polyphénylsulfone (P2), sur la base du poids total de la composition de polymère (C), est supérieur à 90 %.

**9.** Film (F) ayant une épaisseur inférieure à 38,1 µm (1,5 mil) composé de la composition de polymère (C) selon l'une quelconque des revendications précédentes.

**10.** Film selon la revendication 9, qui a une épaisseur d'au moins 2,5 µm (0,10 mil) et inférieure à 25,4 µm (1,0 mil).

**11.** Film selon la revendication 9 ou 10, qui a une épaisseur d'au plus 12,7 µm (0,50 mil).

**12.** Film selon la revendication 9, 10 ou 11, qui a une épaisseur d'au moins 5,1 µm (0,20 mil).

**13.** Film selon la revendication 9, **caractérisé en ce que** :

- il a une épaisseur de 5,1 µm (0,20 mil) à 12,7 µm (0,50 mil),
- la polyétheréthercétone (P1) est un homopolymère dont pratiquement tous les motifs récurrents sont des motifs récurrents (R1) de formule :

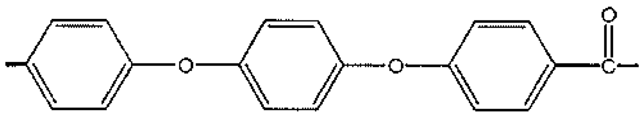

et présente une viscosité à l'état fondu de 0,25 kPa.s à 0,50 kPa.s à 400°C et un taux de cisaillement de 1000 $s^{-1}$ telle que mesurée au moyen d'un rhéomètre capillaire selon l'ASTM D3835,
- la polyphénylsulfone (P2) est un homopolymère dont pratiquement tous les motifs récurrents sont des motifs récurrents (R2) de formule :

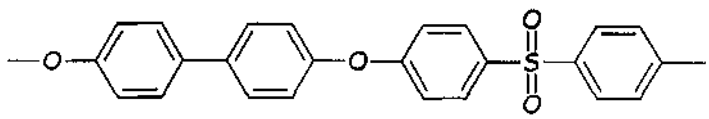

et a un indice de fluidité de 20 g/10 min à 40 g/10 min à 365°C et sous une charge de 5,0 kg, tel que mesuré selon le procédé ASTM D1238,
- le poids de la polyphénylsulfone (P2), sur la base du poids total de la polyétheréthercétone (P1) et la polyphénylsulfone (P2), est dans la plage de 15% à 27%, et
- le poids combiné de la polyétheréthercétone (P1) et la polyphénylsulfone (P2), sur la base du poids total de la composition de polymère (C), est supérieur à 90 %.

**14.** Procédé de fabrication du film selon l'une quelconque des revendications 9 à 13, ledit procédé comprenant l'extrusion à l'état fondu de la composition de polymère (C).

**15.** Procédé selon la revendication 14, **caractérisé en ce que** :

- une extrudeuse comprenant une filière est utilisée,
- la composition de polymère (C) sort de la filière,
- la composition de polymère (C) est une matière fondue lorsqu'elle sort de la filière, et
- la température de la matière fondue lorsqu'elle sort de la filière est d'au moins 370°C et d'au plus 400°C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4175175 A
- WO 2007071780 A


### Non-patent literature cited in the description


- **A.A. MEHMET-ALKAN ; J.N. HAY.** *Polymer,* 1993, vol. 34, 3529